# EUROPEAN PATENT APPLICATION

(11) **EP 3 753 750 A1**
(43) Date of publication of application: **23.12.2020**
(21) Application number: 20180996.9
(22) Date of filing: 19.06.2020
(51) Int. Cl.: B60C 1/00, B60C 9/00, C08K 3/04, C08K 3/06, C08K 3/22, C08K 5/098

(54) **A WIRE COAT COMPOSITION AND A TIRE COMPRISING A WIRE COAT COMPOSITION**

(30) Priority: 20.06.2019 US 201962863988 P
(71) Applicant: The Goodyear Tire & Rubber Company, Akron, OH 44316 (US)
(72) Inventor: WELTER, Carolin Anna, D-54340 Schleich (DE); KNEPPER, Jean-Claude, L-9161 Ingeldorf (LU); JOHNSON, Dawn Michelle, Uniontown, OH Ohio 44685 (US); BUEHLER, Betul, Cuyahoga Falls, OH Ohio 44223 (US)
(74) Representative: Goodyear IP Law

(57) **Abstract**

The invention relates to a wire coat rubber composition for coating metal wires in a tire, the rubber composition comprising from 60 to 100 phr of natural rubber, from 0 to 40 phr of synthetic polyisoprene, from 40 to 100 phr of a filler, the filler comprising from 40 to 70 phr of oxidized carbon black, up to 5 phr of a resin and up to 8 phr of oil. The present invention also relates to a tire comprising such a wire coat composition.

## Description

### Field of the invention

The present invention is directed to a rubber composition for coating wires which are utilized in reinforcing rubber products, such as tires, power transmission belts, conveyor belts, and hoses. The present invention is further directed to coated wires, coating compositions, and rubber products which are reinforced with wires which are coated with the wire coat compositions of this invention.

### Background

Tire performance has significantly improved over recent decades. In some cases this improvement is attributable, at least in part, to the use of silica in tire rubber formulations which has resulted in improved rolling resistance (fuel economy) without compromising tire traction or tread wear characteristics. However, there is still significant room for further improvement. In an effort to further reduce vehicle emissions and to conserve fuel, there continues to be a long felt need to further reduce rolling resistance of tires which are used in a multiple of applications. Such a reduction can be of particular interest for tires of trucks which move heavy loads at relatively constant speed over large distances. Another drawback is that the increased use of silica compounds may reduce design freedom to provide conductive passages through the tire or portions thereof.

### Summary of the invention

A first object of the invention may be to provide wire coat rubber compositions that allow building tires or tire components supporting a low rolling resistance of the tire.

Another object of the invention may be to provide a rubber composition with relatively high rebound, low tangent delta and/or limited hysteresis properties.

Another object of the invention may be to provide improved compositions for wire coatings, in particular for truck tires which may comprise essentially metal reinforcing material, respectively wires.

Another object of the invention may be to provide a coating compound with acceptable mechanical properties, still allowing electrical conductivity which is higher than in high or full silica coating compounds.

The present invention is defined by the scope of claim 1, further preferred embodiments are provided in the dependent claims and the summary and description herein below.

In one aspect of the invention, a rubber composition for a tire or tire component is provided, in particular for coating metal wires, the rubber composition comprising from 60 to 100 phr of natural rubber, from 0 phr to 40 phr of synthetic polyisoprene, from 40 phr to 100 phr, or preferably from 40 to 70 phr, of a filler comprising at least 40 phr oxidized (or surface oxidized) carbon black, up to 5 phr of a resin and up to 8 phr of oil.

Providing oxidized carbon black in the composition according to the invention provides the composition or tire component with a significant conductivity or in other words a relatively low resistivity, in particular lower than in compositions comprising silica instead of such oxidized carbon black. At the same time the oxidized surface of the carbon black provides properties which are not available with non-oxidized / conventional carbon black. The oxidized carbon black filler may allow for similar hysteresis as silica fillers which is typically not possible with conventional carbon black. In particular, the oxidation of the surface of the carbon black results in surface groups improving the compatibility with the rubber material in the rubber composition or in other words with the rubber matrix.

In an embodiment, the rubber composition comprises from 45 to 65 phr of oxidized carbon black or even between 50 phr and 60 phr of oxidized carbon black. This has been determined as the most preferable range by the inventors. The filler content may also be within a range from 40 or preferably 45 phr up to 100, preferably 90 or even more preferably 70 phr.

In an embodiment, the rubber composition may be essentially silica free. In another embodiment, the rubber composition comprises also silica and/or non-oxidized/conventional carbon black. However, the amount of silica is smaller than the amount of oxidized carbon black (in phr). In other words, the phr content of oxidized carbon black compared to the phr content of silica is at least 2:1, preferably, 3:1 or even more preferred 4:1 (all by weight). The silica content can be less than 10 phr or 5 phr of silica. The composition or compound does not have to be necessarily completely silica free but may be. Moreover, the oxidized carbon black can be bound to the silica via its polar surface groups and can thus help to connect silica to the rubber polymers. Moreover, the composition may comprise small amounts of non-oxidized carbon black. However, such amounts may be below 20 phr or below 10 phr or 5 phr.

In still another embodiment, the oxidized carbon black is at least one of hydrogen peroxide treated carbon black and ozone treated rubber carbon black.

In still another embodiment of the invention, the pH of the oxidized carbon black is below 6 and optionally below 4, or even below 3, but optionally above 1. In many cases, the surface oxidized carbon black will have a relatively high acid and/or equivalent content with the surface oxidized carbon black having a total acid content of at least about 0.1 milliequivalents per gram of the surface oxidized carbon black. It is typically preferred for the surface oxidized carbon black to have a total acid content of at least 0.2 milliequivalents per gram of the surface oxidized carbon black and it is typically more preferred for the surface oxidized carbon black to have a total acid content of at least 0.5 milliequivalents per gram of the surface oxidized carbon black.

In yet another embodiment, the oxidized carbon black comprises at least one of: carboxyl groups and hydroxyl groups on its surface. Surface oxidized carbon black that can be utilized in the practice of this invention can be prepared by oxidation of the carbon black surface with a peroxide or with ozone.

For instance, the surface of the carbon black can be oxidized by mixing the carbon black with a liquid hydrogen peroxide to confect a wet solution and then subjecting the wet solution of the carbon black and hydrogen peroxide to an external dryer to simultaneously dry and oxidize the carbon black as described in United States Patent 6,120,594. The teachings of United States Patent 6,120,594 are incorporated herein by reference for the purpose of teachings such a process for the surface oxidization of carbon black with hydrogen peroxide.

United States Patent 6,471,933 discloses a method by which the surface of the carbon black can be oxidized with ozone. More specifically, United States Patent 6,471,933 reveals a process for the oxidation of a carbon black which comprises the following steps: (a) producing a gas stream comprising air, and ozone in a concentration of less than about 4 percent by weight; (b) intimately scrubbing the produced gas stream with water for an interval of time, not more than about 16 seconds, sufficient to ensure reaction between the produced gas stream and the water; (c) contacting a carbon black with said scrubbed gas stream; and (d) recovering an oxidized carbon black therefrom. The teachings of United States Patent 6,471,933 are incorporated herein by reference for the purpose of teachings such a process for the surface oxidization of carbon black with ozone.

The surface oxidized carbon black can also optionally be surface-treated with a base, such as an amine-based compound, in accordance with the teachings of United States Patent Publication No. 2013/0046064 A1. The teachings of United States Patent Publication No. 2013/0046064 A1 are incorporated herein by reference for the purpose of teachings such a surface-treatment of carbon black.

In yet another embodiment, the oxidized carbon black is surface oxidized N234 grade carbon black.

In another embodiment, the composition comprises from 0.1 phr to 5 phr of a cobalt salt, alternatively from 0.2 to 2 phr of cobalt salt. This is of particular interest for improving the adhesion of the composition to the wire. It is optional that the composition is cobalt free, e.g. the cobalt salt amount in the composition is less than 0.1 phr. The rubber compound may contain any of the cobalt materials known in the art to promote the adhesion of rubber to metal. Thus, suitable cobalt materials which may be employed include cobalt salts of fatty acids such as stearic, palmitic, oleic, linoleic and the like; cobalt salts of aliphatic or alicyclic carboxylic acids having from 6 to 30 carbon atoms, such as cobalt neodecanoate; cobalt chloride, cobalt naphthenate; cobalt carboxylate and an organo-cobalt-boron complex commercially available under the designation Manobond C from Wyrough and Loser, Inc, Trenton, N.J. The specific amount of organo-cobalt compound which may be employed depend upon the specific nature of the cobalt material selected and particularly the amount of cobalt metal present in the compound. When used, the amount of cobalt material present should be sufficient to provide from about 0.01 percent to about 0.50 percent by weight of cobalt metal based upon total weight of the rubber with the preferred amounts being from about 0.03 percent to about 0.2 percent by weight of cobalt metal based on total weight of the rubber composition.

In yet another embodiment, the composition may comprise from 5 phr to 15 phr of zinc oxide which shall also help in ensuring a better adhesion between the wire surface and the composition. Typically, metal wires may be brass coated.

In still another embodiment, the composition comprises 1 phr to 15 phr of sulfur, alternatively from 4 phr to 10 phr of sulfur. This relatively high sulfur content has been chosen by the inventors to provide also a good adhesion between the wire surface and the compound in addition to the desired polymer cross-linking during cure of the composition.

In another embodiment of the invention, the rubber composition is essentially resin free and/or may comprise less than 2 phr of resin. Provision of resin free compounds has become more and more desirable in view of environmental, health and safety considerations.

In still another embodiment, the rubber composition comprises less than 5 phr of oil. One aim is to provide the composition with a relatively high stiffness. Large amounts of oil may be an obstacle in reaching such a preferred target.

In a second aspect of the invention, a tire is provided which includes a rubber composition in accordance with the first aspect of the invention and/or one or more of the embodiments mentioned herein, in particular above.

In a further embodiment, the tire comprises metal wires coated with the rubber composition.

In another embodiment, the tire comprises a belt having a plurality of belt plies and a carcass comprising a plurality of carcass plies, wherein at least one of the carcass plies and the belt plies comprises wires being coated with the rubber composition. For instance, all wires of one or more belt plies may be covered with the rubber composition. All wires of one or more carcass plies may also be covered with the rubber composition.

In another embodiment, the tire is a pneumatic radial truck tire.

Examples for the used rubbers may be synthetic cis 1,4-polyisoprene and cis 1,4-polyisoprene natural rubber which are as such well known to those having skill in the rubber art. Moreover, such polyisoprene may be understood as 1,4-polyisoprene having at least 90 percent cis-content, preferably at least 92 percent cis-content or at least 95 percent cis-content.

In an embodiment, the rubber composition may include processing oil. Processing oil may be included in the rubber composition as extending oil typically used to extend elastomers. Processing oil may also be included in the rubber composition by addition of the oil directly during rubber compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

As mentioned above, the rubber composition may include silica. The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of from about 40 to about 600 square meters per gram. In another embodiment, the BET surface area may be in a range of from about 80 to about 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of from about 100 to about 400, alternatively from about 150 to about 300.

The conventional silica might be expected to have an average ultimate particle size, for example, in the range of from 0.01 micron to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, etc; silicas available from Rhodia, with, for example, designations of Z1165MP and Z165GR, and silicas available from Degussa AG with, for example, designations VN2 and VN3, etc.

If (non-oxidized) carbon blacks are additionally used as a conventional filler, representative examples of such carbon blacks may include ASTM grades N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm3/100 g.

In one embodiment, the rubber composition may contain a conventional sulfur containing organosilicon compound. Examples of suitable sulfur containing organosilicon compounds are of the formula:

Z-Alk-Sn-Alk-Z I

in which Z is selected from the group consisting of 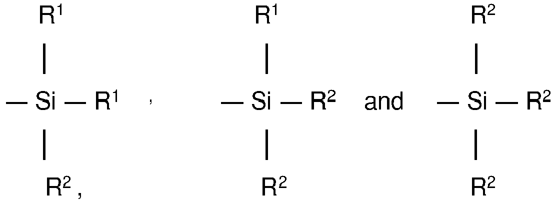 where R¹ is an alkyl group of from 1 to 4 carbon atoms, cyclohexyl or phenyl; R² is alkoxy of from 1 to 8 carbon atoms, or cycloalkoxy of from 5 to 8 carbon atoms; Alk is a divalent hydrocarbon of from 1 to 18 carbon atoms and n is an integer of from 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl)disulfide and/or 3,3'-bis(triethoxysilylpropyl)tetrasulfide. Therefore, as to formula I, Z may be 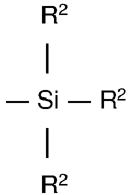 where R² is an alkoxy of from 2 to 4 carbon atoms, alternatively 2 carbon atoms; Alk is a divalent hydrocarbon of from 2 to 4 carbon atoms, alternatively with 3 carbon atoms; and n is an integer of from 2 to 5, alternatively 2 or 4.

In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT™ from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise from about 1 to about 5 phr. Typical amounts of fatty acids, if used, which can include stearic acid comprise from about 0.5 to about 3 phr. Typical amounts of waxes comprise from about 1 to about 5 phr. Often, microcrystalline waxes are used. Typical amounts of peptizers comprise from about 0.1 to about 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from about 0.5 to about 4, alternatively from about 0.8 phr to about 1.5, phr. In another embodiment, combinations of a primary and a secondary accelerator might be used with the secondary accelerator being used in smaller amounts, such as from about 0.05 phr to about 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) of the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of (rubber) components of the tire. For example, in an embodiment, the component is a belt ply, carcass ply, ply strip or an overlay ply. It is emphasized that not all components in a tire need to include the rubber composition in accordance with the invention. In particular, it could be that just one of the belt plies has a rubber coat composition according to the invention while other plies of the tire do not.

The tire of the present invention may be a race tire, passenger tire, aircraft tire, agricultural tire, earthmover tire, off-the-road tire, truck tire, and the like. In one embodiment, the tire is a passenger or truck tire. The tire may also be a radial or bias. In a preferred embodiment, the tire is a radial pneumatic truck tire.

Vulcanization of the pneumatic tire of the present invention is generally carried out at conventional temperatures ranging from about 100°C to about 200°C. In one embodiment, the vulcanization is conducted at temperatures ranging from about 110°C to about 180°C. Any of the usual vulcanization processes may be used such as heating in a press or mold, heating with superheated steam or hot air. Such tires can be built, shaped, molded and cured by various methods which are known and will be readily apparent to those having skill in such art.

### Brief description of the drawings

The structure, operation and advantages of the invention will become more apparent upon contemplation of the following description taken in conjunction with the accompanying drawings, wherein:
Figure 1 represents a schematic cross-section of a tire in accordance with an embodiment of the invention.
Figure 2 represents a schematic cross-section of a ply (e.g. a belt, carcass or overlay ply) comprising wires or cords coated with the rubber composition in accordance with an embodiment of the invention.

### Detailed description of the embodiments

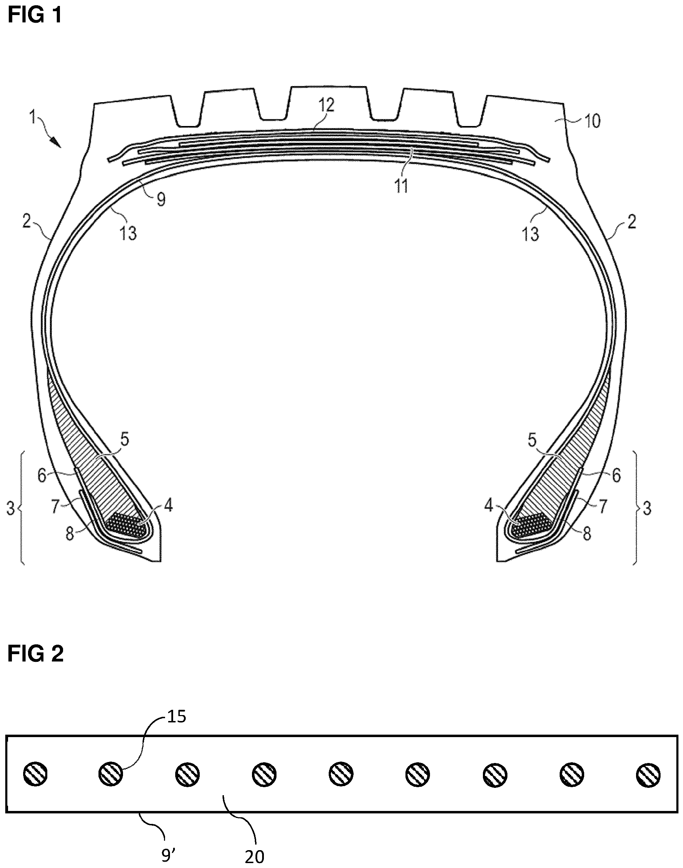

Figure 1 is a schematic cross-section of a tire 1. The tire 1 has a tread 10, an inner liner 13, a belt structure comprising four belt plies 11, a carcass ply 9, two sidewalls 2, and two bead regions 3 comprising bead filler apexes 5 and beads 4. The example tire 1 is suitable, for example, for mounting on a rim of a vehicle, e.g. a truck or a passenger car. As shown in Figure 1, the belt plies 11 may be covered by an overlay ply 12. The carcass ply 9 includes a pair of axially opposite end portions 6, each of which is associated with a respective one of the beads 4. Each axial end portion 6 of the carcass ply 9 may be turned up and around the respective bead 4 to a position to anchor each axial end portion 6. One or more of the carcass ply 9, belt plies 11 and overlay ply 12 comprise a rubber composition in accordance with the invention and may have a plurality of substantially parallel reinforcing members made of metal wire. The turned-up portions 6 of the carcass ply 9 may engage the axial outer surfaces of two flippers 8 and axial inner surfaces of two chippers 7. As shown in Figure 1, the example tread 10 may have four circumferential grooves, each groove essentially defining a U-shaped opening in the tread 10. The main portion of the tread 10 may be formed of one or more tread compounds, which may be any suitable tread compound or compounds.

While the embodiment of Figure 1 suggests a plurality of tire components including for instance apexes 5, chippers 7, flippers 8 and overlay 12, such components are not mandatory for the invention. Also, the turned-up end of the carcass ply 9 is not necessary for the invention or may pass on the opposite side of the bead area 3 and end on the axially inner side of the bead 4 instead of the axially outer side of the bead 4. The tire could also have for instance more or less than four grooves.

The schematic cross-section of Figure 2 shows a ply, e.g. a carcass, belt or overlay ply 9' which comprises a plurality of metal, for instance steel, wires 15 reinforcing the rubber composition material 20. Typically, such a ply is made in a wire calendar in which a plurality of essentially parallel metal wires is coated from both sides with a layer or sheet of rubber composition 20. Such methods are well known to the person skilled in the art of tire building. After curing, the wires 15 are embedded in the rubber composition 20, reinforcing the same.

Metal wires 15 may be coated with brass for better adhesion properties with regards to connection of the wires 15 to the cured rubber composition 20. The wires 15 may also be dipped in dipping solutions or emulsions for better adhesion properties as known in the art. Neither a dip nor a metal coating is shown here in Figure 2. For the sake of better adhesion of the compound 20 to the metal wire 15, the compound 20 may comprise cobalt salt. Moreover, the compound 20 can comprise zinc oxide which may also improve the adhesion between the metal wire 15 and the cured compound 20.

While the schematic drawing of Figure 2 indicates nine wires, the number of parallel wires per ply could be different, for instance at least 5 or 10. The invention could also be used in a ply strip comprising the rubber composition, with the strip comprising only between 3 and 6 metal wires.

Examples of rubber compositions in accordance with the invention are shown in below Table 1 in comparison with a control sample. The control sample comprises highly dispersed silica (HDS) whereas the compounds according to the invention comprise oxidized carbon black. Moreover, Inventive Example 1 is a full natural rubber composition whereas Example 2 comprises a blend of natural rubber and synthetic polyisoprene. Apart from said main difference in the rubber material, Example 1 has a slightly higher amount of oil than Example 2 whereas Example 2 has a higher amount of sulfur than Example 1.

**TABLE 1**

| **Material** | Parts by weight (phr) | | |
|---|---|---|---|
| | **Control** | **Inventive Example 1** | **Inventive Example 2** |
| Natural Rubber | 100 | 100 | 75 |
| Synthetic Polyisoprene | 0 | 0 | 25 |
| Oil¹ | 3.5 | 3.5 | 2 |
| Zinc Oxide | 9 | 9 | 9 |
| Precipitated HDS Silica² | 55 | 0 | 0 |
| Silica Coupler³ | 6 | 0 | 0 |
| Carbon Black | 6 | 0 | 0 |
| Oxidized Carbon Black⁴ | 0 | 55 | 55 |
| Cobalt Salt | 0.5 | 0.5 | 0.5 |
| Antidegradants | 4.5 | 4.5 | 4.5 |
| Stearic acid | 1 | 1 | 1 |
| Accelerator⁵ | 2 | 2 | 2 |
| Sulfur | 5 | 5 | 6 |

| | | | |
|---|---|---|---|
| ¹ Rubber process oil comprised of TDAE oil ² Precipitated silica as Zeosil 1165MP™ from Solvay ³ Silica coupler as X50S™ from Evonik ⁴ Oxidized carbon black as an oxidized N234 ⁵ Sulfur cure accelerators as a sulfenamide | | | |

Below Table 2 discloses mechanical test results for the Control composition and Example compositions in accordance with the invention. Shore A hardness is slightly lower in the Examples according to the invention than in the Control Sample. Rebound properties are the same or better than of the Control Sample which is remarkable as no silica is used. The low strain values for G' follow the behavior of the Shore A hardness such that they are below the Control Sample values. The tangent delta values are also almost unchanged when comparing the Control and Invention Examples. Elongation at break is roughly about 10 % worse for Example 1 than for the Control Sample and for Example 2 about 20 % lower than for the Control Sample. Modulus at 100 % strain values are about 10 % lower for Example 1 than for the Control while they are about 5 % higher for Example 2. Modulus 300 % values have increased by more than 10 % over the Control Sample. While the tensile strength has slightly increased for Example 1, it has slightly decreased for Example 2 in comparison with the Control Sample. For the SWAT adhesion test, the pulling force has decreased more significantly compared to the Control, i.e. roughly in the order of 20 %.

Remarkably, the volume resistivity of the compound has significantly decreased from 10¹¹ Ohm cm to 8 x 10⁷ Ohm cm in Example 1 and to 3 x 10⁷ Ohm cm in Example 2 which is more than a 3 order of magnitude decrease in volume resistivity. In other words, the conductivity was significantly increased.

In summary, many differences in the properties as listed in Table 2 are relatively small whereas the change in the resistivity between the Control Sample and the Examples according to the invention is very significant, making these compounds sufficiently electrically conducting. This reduced resistivity may allow to replace silica in wire coat compounds with oxidized carbon black, while essentially maintaining (or in some cases even improving) the level of properties compared to the silica sample. This can be of special interest when electrical conductivity is required for the specific application of the compound.

**TABLE 2**

| **Test / Property** | **Units** | **Control** | **Invention Example 1** | **Invention Example 2** |
|---|---|---|---|---|
| Shore A hardness (23°C)^{a} | - | 78.3 | 73 | 73.6 |
| Rebound (23°C) ^{b} | % | 50.4 | 54.3 | 51 |
| Rebound (100°C)^{b} | % | 69 | 72.2 | 69.4 |
| G' (1%) ^{c} | MPa | 3.8 | 2.9 | 3.1 |
| G' (10%) ^{c} | MPa | 2.2 | 1.7 | 1.8 |
| G' (15%) ^{c} | MPa | 1.8 | 1.5 | 1.5 |
| G' (50%) ^{c} | MPa | 1.0 | 1.0 | 1.0 |
| Tan delta (10%) ^{c} | - | 0.15 | 0.14 | 0.15 |
| Elongation at break (23°C) ^{d} | % | 444 | 409 | 367 |
| Modulus 100 % (23°C) ^{d} | MPa | 4.3 | 3.9 | 4.5 |
| Modulus 300 % (23°C) ^{d} | MPa | 14.9 | 16.7 | 17.5 |
| Tensile Strength (23°C) ^{d} | MPa | 21 | 21.4 | 19.6 |
| SWAT Adhesion ^{e} | N | 817 | 653 | 620 |
| Volume resistivity ^{f} | Ohm cm | 1 × 10¹¹ | 8 × 10⁷ | 3 × 10⁷ |

| | | | | |
|---|---|---|---|---|
| ^{a} Shore A hardness measured according to ASTM D2240. ^{b} Rebound measured on a Zwick Roell 5109 rebound resilience tester according to DIN 53512 / ASTM D1054 at given temperature. ^{c} Data obtained with an RPA 2000™ Rubber Process Analyzer of Alpha Technologies company; sample cure temperature 191°C based on ASTM D5289. ^{d} Ring sample test based on ASTM D412 and DIN 53504, percentages are percentages of elongation, respectively strain; tensile strength is stress at break; elongation is elongation at break in %; ^{e} Standard wire and textile cord adhesion test (SWAT) conducted by embedding brass coated wire cord in the rubber composition. The rubber/cord samples were then cured at 155°C. The respective cords in the rubber samples were subjected to a pull-out test according to ASTM D2229-73. ^{f} Volume resistivity measurement according to ASTM D257. | | | | |

If not stated otherwise herein, amounts of materials are usually expressed in parts of material per 100 parts of rubber by weight (phr).

If an amount of ingredient is mentioned with "up to" herein, this shall include also the option of 0 (zero) phr of that ingredient or may also be understood as "from 0 to".

PH measurements of (oxidized) carbon black may be carried out according to ASTM D1512-05.

Variations in the present invention are possible in light of the provided description. While certain representative embodiments, examples and details have been shown for the purpose of illustrating the subject invention, it will be apparent to those skilled in this art that various changes and modifications can be made therein without departing from the scope of the invention. It is, therefore, to be understood that changes may be made in the particular example embodiments described which will be within scope of the invention as defined by the following appended claims.

In any case the above described embodiments and examples shall not be understood in a limiting sense. In particular, the features of the above embodiments may also be replaced or combined with one another.

The rubber formulation can also be filled with a surface-treated-carbon-black. Such surface treated carbon black can be treated with peroxide or ozone which results in oxidation of the surface of the carbon black with polar, oxygen-containing functionalities. Such surface-treated carbon black is described in greater detail in United States Patent Publication No. 2013/0046064. The teachings of United States Patent Publication No. 2013/0046064 are incorporated herein by reference.

## Claims

1. A wire coat rubber composition for a tire, the rubber composition comprising:
from 60 to 100 phr of natural rubber,
from 0 to 40 phr of synthetic polyisoprene,
from 40 to 100 phr of a filler, the filler comprising at least 40 phr of a surface oxidized carbon black,
from 0 to 5 phr of a resin, and
from 0 to 8 phr of oil.

2. The rubber composition of claim 1, comprising:
from 40 to 70 phr of the filler; and/or
from 45 to 65 phr, preferably from 50 to 60 phr, of the surface oxidized carbon black.

3. The rubber composition of claim 1 or 2, wherein the filler further comprises silica, and wherein the ratio between the surface oxidized carbon black and the silica is at least 2:1, and preferably at least 3:1.

4. The rubber composition according to one or more of the preceding claims, wherein the surface oxidized carbon black is hydrogen peroxide treated carbon black, and/or wherein the surface oxidized carbon black is ozone treated carbon black.

5. The rubber composition according to one or more of the preceding claims, wherein the pH of the surface oxidized carbon black is below 6, and preferably below

6. The rubber composition according to one or more of the preceding claims, wherein the pH of the surface oxidized carbon black is within the range of 1 to 3.

7. The rubber composition according to one or more of the preceding claims, wherein said surface oxidized carbon black comprises at least one of carboxyl groups and hydroxyl groups on its surface.

8. The rubber composition according to one or more of the preceding claims, wherein the surface oxidized carbon black is a surface oxidized N234 carbon black.

9. The rubber composition according to one or more of the preceding claims, further comprising from 0.1 phr to 5 phr of a cobalt salt, preferably from 0.2 phr to 5 phr of a cobalt salt.

10. The rubber according to one or more of the preceding claims, further comprising from 1 phr to 20 phr of zinc oxide, preferably from 5 phr to 15 phr of zinc oxide.

11. The rubber composition according to one or more of the preceding claims which is further comprised of 4 phr to 10 phr of sulfur.

12. The rubber composition according to one or more of the preceding claims, wherein the rubber composition is essentially resin free.

13. The rubber composition according to one or more of the preceding claims, wherein the composition has one or more of: less than 2 phr of the resin, and less than 5 phr of oil.

14. A tire comprising metal wires coated with a rubber composition according to one or more of the preceding claims.

15. The tire of claim 14, comprising one or more of the following rubber components: a belt ply, a carcass ply, a ply strip, and an overlay ply, wherein at least one of said components comprised in the tire comprises the rubber composition with the metal wires embedded therein.
